# EUROPEAN PATENT APPLICATION

(11) **EP 1 087 602 A2**
(43) Date of publication of application: **28.03.2001**
(21) Application number: 00307029.9
(22) Date of filing: 16.08.2000
(51) Int. Cl.: H04M 11/04

(54) **Alarm system**

(30) Priority: 24.09.1999 GB 9922568
(71) Applicant: CEDARDELL LIMITED, Hexam, Northumberland NE46 5SN (GB)
(72) Inventor: Todd, Robert Edmund, Blyth, Northumberland NE24 2PP (GB)
(74) Representative: Vinsome, Rex Martin

(57) **Abstract**

An alarm system 1 provided with one or more detectors 2 for monitoring an environment and producing an output signal in response to changes in an environment is disclosed. A control unit 3 processes the or each output signal from the or each sensor 2 and generates an alarm signal in response to changes in the environment indicating an alarm condition. The system 1 is activated and deactivated by means of at least one telephone hand set 5.

## Description

The present invention relates to alarm systems and particularly, but not exclusively, to alarm systems protecting domestic premises.

Burglar alarms presently used to protect domestic buildings generally consist of three main types of system for activating and deactivating such alarms. In a first type, a key may be provided to authorised persons which activates and deactivates the alarm system. Such systems suffer from the disadvantages that the keys are often of a simple design and the security of the key can therefore often be easily overcome. Keys may also be lost, stolen or copied. Furthermore, the control panel for such systems is often located in a hidden location such as a cupboard which may restrict access or ease of use.

A second means of activating or deactivating an alarm system is the remote control. This is a small battery operated transmitting device which produces a signal which activates or deactivates the alarm system. As with the key control systems the remote control can be lost or stolen, and the signal may be "captured" and then replayed at will. The remote control may also be pressed accidentally, deactivating the alarm unintentionally, or the battery for the remote control may become exhausted and the remote control unusable until the battery is replaced.

In the third type of system, a keypad can be used to activate and deactivate the alarm system, and is commonly used in cooperation with LED indicators or a LCD screen. The entering of a code number activates and deactivates the system and instructions on the LCD screen or via LED indicators tell the user the system status and/or what information is required. As with key operated alarms, keypad controlled systems are often located in a hidden place with resultant access problems and the instructions provided by LED or LCD screens are often not easily read or understood. Furthermore, such systems suffer from the drawback that users may forget codes necessary to activate or deactivate the system.

All of the above described prior art systems suffer from the disadvantage that they are often difficult for many domestic users to operate.

Preferred embodiments of the present invention seek to overcome the above disadvantages of the prior art.

According to the present invention, there is provided an alarm system comprising:-
at least one sensor means for monitoring a predetermined environment and producing a respective output signal in response to changes in said environment; and
control means for processing the or each said output signal and generating an alarm signal in response to changes in said environment indicating an alarm condition;
   wherein the system is adapted to be activated and deactivated by means of at least one telephone handset.

By using a telephone handset to activate and deactivate an alarm system, this provides the advantage of utilising a familiar household product, thus increasing the ease of use of the system. The majority of buildings contain a telephone and it is a device with which most people are familiar. Furthermore, it is increasingly commonplace to use a telephone keypad to select options from a menu of audio instructions, and therefore information and instructions can pass between an alarm system and its user in a way which is familiar to that user. Telephones are usually located in convenient places, and even if this is not the case such devices are relatively inexpensive and easy to install in a convenient location such as adjacent the main entrance to a building.

At least one said telephone handset is preferably adapted to be connected via a telephone network to an operator at a remote location, the operator being able to activate and/or deactivate the system from said remote location via said telephone network.

This provides the advantage that the operator may activate and/or deactivate the system in response to predetermined information from the user identifying the user as a person authorised to activate or deactivate the system, for example personal information such as the maiden name of the user's mother.

In a preferred embodiment, the system is adapted to transfer user identification data to said operator via said telephone network.

For example, the system, in response to the user connecting to the operator, may automatically download stored predetermined system identification data to the operator at the remote location, for example details known only to specified authorised persons. This provides the advantage that the operator could then check whether a user is an authorised person without having to permanently store the system identification data at the remote location.

In a preferred embodiment each of the telephone handsets may be connected directly to the control means. Alternatively a plurality of interconnected handsets communicate with the control means.

In a preferred embodiment instructions from the control means are communicated to a user audibly through the telephone handset.

In a further preferred embodiment, the telephone handset is adapted to receive instructions to the control means in use from the user by the pressing of buttons on said telephone handset.

In a further preferred embodiment, the telephone handset is adapted to receive instructions to the control means by means of voice commands of the user.

In another preferred embodiment, the system is adapted to be located in a building and is adapted to generate a ringing signal of the telephone handset in response to entry into the building.

This provides the advantage that an intruder is unlikely to answer the telephone and after a prescribed time period allowed to answer the phone and enter the deactivating code, the system can set off the alarm.

As an aid to understanding the invention, a preferred embodiment thereof will now be described, by way of example only and not in any limitative sense, with reference to the accompanying drawings, in which:-
Figure 1 is a schematic diagram of the component parts of a first embodiment of the present invention; and
Figure 2 is a schematic diagram of the component parts of a second embodiment, corresponding to Figure 1.

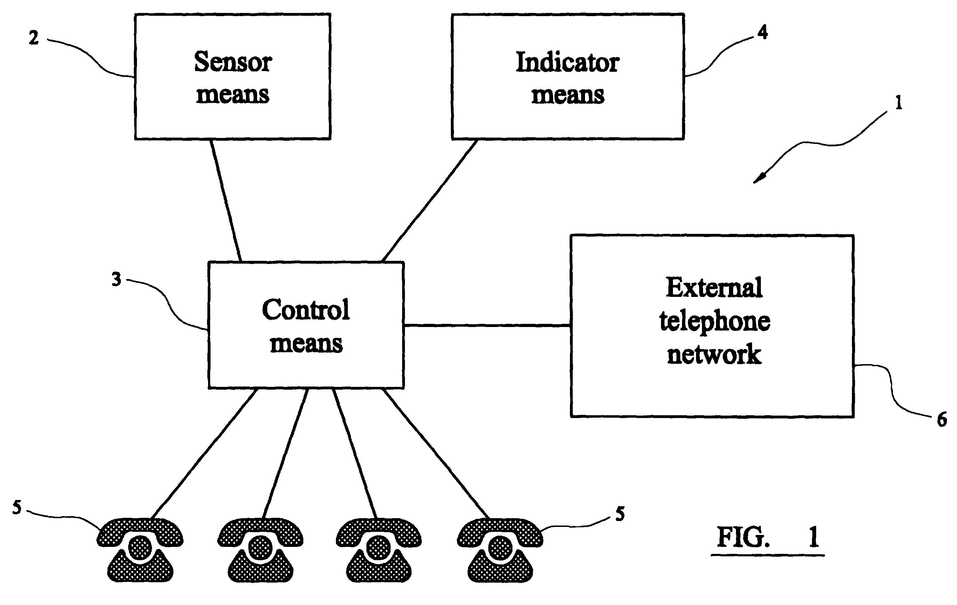

Referring in detail to Figure 1, an alarm system 1 is provided with one or more sensors 2, a control unit 3 and indicator means 4. Control unit 3 is connected to telephone handsets 5, and to external telephone network 6 such as the public telephone network.

The sensors 2 detect intrusion into a building, examples of such sensors include, motion detectors, open-entry detectors or floor mounted pressure detectors. The output from sensors 2 is transmitted to the control unit 3 which evaluates the signals and, if appropriate, sends an output signal to indicator means 4. Indicator means 4 may be a bell or siren, or other means for drawing attention to the premises where an intrusion has occurred. Indicator means 4 may alternatively or in addition be removed from the system where the control unit 3 alerts someone outside the premises by making a prerecorded telephone call via the external telephone network to which it is connected.

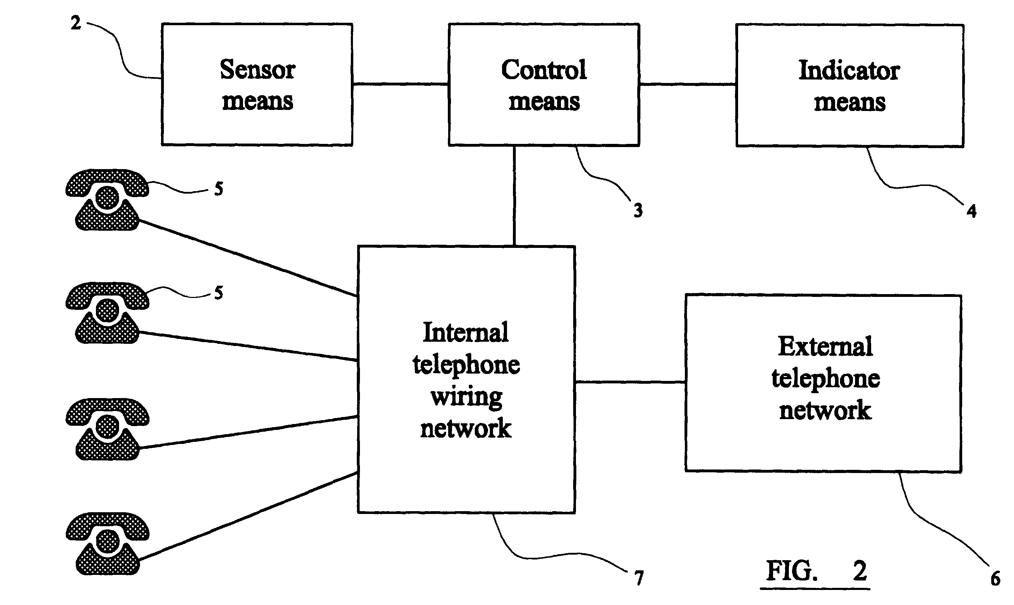

Referring to Figure 2, the control unit 3 is connected to external telephone network 6 via internal telephone wiring network 7 into which are also connected telephone handsets 5.

In operating the alarm systems of Figures 1 and 2 the following steps are an example of an activation and deactivation sequence. To activate the alarm system the user lifts the telephone handset, and on a hearing the dialling tone, waits 5 seconds, after which period voice instructions will start. The user can choose to "accelerate" this process by quickly pressing the telephone cradle at any point during this 5 second period, after which the voice instructions will start immediately. The alarm system then plays a message, "Please enter your code number", and the user presses the required numbers of their access code into the telephone keypad. If the correct code is entered the alarm system then prompts with the question, "Press 1 to set your system" and upon the user pressing 1, the system arms and then says, "Your system is now arming". The telephone then gives a distinctive ring to indicate to the user that the alarm is activated.

Upon returning to the building, when a door is opened, the alarm system causes the telephone handset to ring as though there were a normal incoming telephone call. When the telephone is answered the alarm system says, "Please enter your alarm deactivation code". The user then enters their code via the telephone keypad and the alarm deactivates and says, "Your system is deactivated, thank you".

This wait period allows the telephone handset to be used as a normal telephone, without additional operations being required of the user. The voice instructions would typically be (because the system knows that it is un-set):

"To set your alarm system, please enter your 4 digit number or press "*" to talk to an operator".

If the user wishes to use a voice command, this can be set up over the voice line with a control centre. Any other assistance that the user may require could also be made available at this time, or after any "voice message".

By providing a telephone connection between the user and a control centre having an operator at a remote location, the system can download system and user identification data, such as data known only to an authorised user, to the operator. This enables the operator to identify whether a user claiming, for example, to have forgotten an access code, is an authorised user of the system and activate or deactivate the system remotely from the control centre.

It will be appreciated by persons skilled in the art that the above embodiment was described by way of example only and not in any limitative sense, and that various alterations and modifications are possible without departure from the scope of the invention as defined in the appended claims.

## Claims

1. An alarm system comprising:-
at least one sensor means for monitoring a predetermined environment and producing a respective output signal in response to changes in said environment; and
control means for processing the or each said output signal and generating an alarm signal in response to changes in said environment indicating an alarm condition;
wherein the system is adapted to be activated and deactivated by means of at least one telephone handset.

2. A system according to claim 1, wherein at least one said telephone handset is adapted to be connected via a telephone network to an operator at a remote location, the operator being able to activate and/or deactivate the system from said remote location via said telephone network.

3. A system according to claim 2, wherein the system is adapted to transfer user identification data to said operator via said telephone network.

4. A system according to claim 3, wherein the system is adapted to, in response to the user connecting to the operator, automatically download stored predetermined system identification data to the operator at the remote location.

5. A system according to any one of the preceding claims, wherein each of the telephone handsets is connected directly to the control means.

6. A system according to any one of claims 1 to 4, wherein a plurality of interconnected handsets communicate with the control means.

7. A system according to any one of the preceding claims, wherein instructions from the control means are communicated in use to a user audibly through the telephone handset.

8. A system according to any one of the preceding claims, wherein the telephone handset is adapted to receive instructions to the control means in use from the user by the pressing of buttons on said telephone handset.

9. A system according to any one of the preceding claims, wherein the telephone handset is adapted to receive instructions to the control means by means of voice commands of the user.

10. A system according to any one of the preceding claims, wherein the system is adapted to be located in a building and is adapted to generate a ringing signal of the telephone handset in response to entry into the building.
